# DEMANDE DE BREVET EUROPEEN

(11) **EP 3 736 931 A1**
(43) Date de publication de la demande: **11.11.2020**
(21) Numéro de dépôt: 20172848.2
(22) Date de dépôt: 05.05.2020
(51) Int. Cl.: H02G 15/117, H02G 9/10

(54) **INSTALLATION POUR CABLES ELECTRIQUES A HAUTE TENSION**

(30) Priorité: 07.05.2019 FR 1904748
(71) Demandeur: Nexans, 92400 Courbevoie (FR)
(72) Inventeur: FEHLBAUM, Jean, 2016 CORTAILLOD (CH); MOUCHANGOU, Christian, 2016 CORTAILLOD (CH)
(74) Mandataire: Ipsilon

(57) **Abrégé**

Cette installation comporte au moins un câble (12) électrique ayant trois conducteurs, au moins un fourreau contenant au moins un tronçon du câble (12) et au moins une chambre (10) de raccordement dans laquelle deux tronçons du câble (12) sont raccordés au moyen d'un joint (14) de raccordement. Le câble (12) est un assemblage hélicoïdal des trois conducteurs qui ne comporte ni armure, ni gaine autour de cet assemblage.

## Description

La présente invention se rapporte à une installation pour câbles électriques à haute tension. Par « haute tension », on entend des niveaux de tension de l'ordre de quelques kV à plusieurs centaines de kV.

L'invention appartient au domaine des câbles électriques.

Dans les réseaux de câblage électrique urbains, les câbles électriques à haute tension sont généralement contenus dans des fourreaux, typiquement en matière thermoplastique (polyéthylène PE ou chlorure de polyvinyle PVC).

Un câble à haute tension est amené à s'échauffer sous l'effet du courant qui y circule. Cet échauffement crée un allongement du câble, qui a alors tendance à « serpenter » à l'intérieur du fourreau. C'est pourquoi les fabricants de câbles recommandent de maintenir un facteur généralement compris entre 1,5 et 2 entre le diamètre extérieur du câble et le diamètre intérieur du fourreau.

Ainsi, l'encombrement global de telles installations est important et peut poser problème. Par ailleurs, le taux de remplissage des fourreaux, en termes de diamètre, ne dépasse généralement pas 60 à 70% et n'est donc pas optimal.

La présente invention a pour but de remédier aux inconvénients précités de l'art antérieur pour le cas particulier des câbles tripolaires, comportant ainsi trois conducteurs.

Dans ce but, la présente invention propose une installation comportant au moins un câble électrique ayant trois conducteurs, au moins un fourreau contenant au moins un tronçon du au moins un câble et au moins une chambre de raccordement dans laquelle deux tronçons du au moins un câble sont raccordés au moyen d'un joint de raccordement, cette installation étant remarquable en ce que l'au moins un câble est un assemblage hélicoïdal des trois conducteurs qui ne comporte ni armure, ni gaine autour de l'assemblage.

Le fait de prévoir un câble sans gaine ni armure autour de l'assemblage des trois conducteurs présente plusieurs avantages. Non seulement il permet de simplifier la fabrication du câble et donc d'abaisser les coûts de fabrication, mais en outre, il permet d'exploiter plus efficacement les possibilités de déplacement du câble lorsqu'il serpente dans le volume intérieur du fourreau du fait de son élongation thermique. En effet, les trois conducteurs sont libres de s'écarter les uns des autres pour migrer individuellement vers la paroi interne du fourreau et adopter une trajectoire plus sinueuse, donc plus longue que la trajectoire initiale.

Par ailleurs, cela permet d'augmenter le taux de remplissage du fourreau, en termes de diamètre, pour atteindre un taux voisin de 90%. De plus, le rapport entre le diamètre extérieur du câble et le diamètre intérieur du fourreau peut être ramené à environ 1,1, ce qui permet de mettre en place des câbles d'une dimension et donc, d'une capacité de transport électrique plus importante qu'auparavant dans un même fourreau.

Dans un mode particulier de réalisation, l'installation comporte en outre au moins un élément de rétention disposé autour du au moins un câble dans la chambre de raccordement.

L'élément de rétention permet de serrer les trois conducteurs afin de les bloquer lors du mouvement naturel et longitudinal lié à leur échauffement sous l'effet du courant. Cela permet de garantir que l'élongation thermique du câble demeure confinée à l'intérieur du fourreau et ne se propage pas dans la chambre de raccordement.

Dans un mode particulier de réalisation, l'installation comporte deux éléments de rétention placés respectivement aux deux extrémités opposées de la chambre de raccordement.

Une telle répartition des éléments de rétention permet d'équilibrer les forces de rétention appliquées au câble et d'améliorer encore la maîtrise de son élongation thermique.

Dans un mode particulier de réalisation, l'élément de rétention est une bride tripolaire.

Cela permet de loger dans une même pièce de rétention les trois conducteurs du câble, respectivement dans les trois logements de la bride.

Dans un mode particulier de réalisation, le joint de raccordement est inséré de manière à peu près équidistante des extrémités opposées de la chambre de raccordement.

Cela permet de faciliter la jonction de deux tronçons de câble, dont une même longueur sera disponible dans la chambre de raccordement.

Dans un mode particulier de réalisation, l'installation comporte en outre au moins un élément de rigidification fixé sur un segment de longueur prédéterminée du au moins un câble et/ou du joint de raccordement, dans la chambre de raccordement.

L'ajout d'un élément de rigidification, soit en supplément des éléments de rétention, soit en lieu et place de ceux-ci, permet de contenir le flambage des trois conducteurs et des trois manchons du joint de raccordement qui relie les deux tronçons de câble dans la chambre de raccordement, ce flambage pouvant être engendré par l'élongation résiduelle des conducteurs entre les deux extrémités de la chambre de raccordement.

Selon une caractéristique particulière, l'au moins un élément de rigidification peut comporter une barre rigide.

L'effet produit par la fixation d'une telle barre sur le câble et/ou sur le joint de raccordement est comparable à celui d'une attelle.

Dans un mode particulier de réalisation, l'installation comporte une pluralité d'éléments de rigidification fixés sur des segments de longueur prédéterminée du au moins un câble et du joint de raccordement.

Cela permet d'augmenter le maintien de l'ensemble formé par les deux tronçons de câble et leur joint de raccordement dans la chambre de raccordement. Ainsi, même dans le cas où la résultante des forces de compression liées à l'échauffement thermique devait être non nulle en raison de disparités de longueur de part et d'autre du point de jonction, cela permet de minimiser la valeur de cette résultante.

Dans un mode particulier de réalisation, l'au moins un fourreau comporte une paroi interne et au moins un élément d'étanchéification obturant de façon étanche à l'eau l'espace entre l'assemblage hélicoïdal des trois conducteurs et la paroi interne.

Cela permet de prévenir les écoulements d'eau depuis le fourreau en direction de la chambre de raccordement.

Dans un mode particulier de réalisation, l'au moins un fourreau est réalisé dans une matière thermoplastique.

L'invention est alors d'autant plus utile que les matières thermoplastiques requièrent davantage de contrôle de l'élongation thermique des câbles que les fourreaux métalliques.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique en perspective et en coupe longitudinale d'une chambre de raccordement comprise dans une installation conforme à la présente invention, dans un mode particulier de réalisation.
[Fig. 2] est une vue schématique d'une portion d'un câble électrique compris dans une installation conforme à la présente invention, dans un mode particulier de réalisation.
[Fig. 3] est une vue schématique par transparence d'une portion de câble électrique contenue dans un fourreau, le câble et le fourreau étant compris dans une installation conforme à la présente invention, dans un mode particulier de réalisation, lorsque la température est suffisamment basse pour ne pas engendrer d'allongement thermique du câble.
[Fig. 4] est une vue schématique en section du câble électrique et du fourreau de la figure 3, lorsque la température est suffisamment basse pour ne pas engendrer d'allongement thermique du câble.
[Fig. 5] est une vue schématique en section du câble électrique et du fourreau de la figure 3, lorsque la température est suffisamment élevée pour engendrer un allongement thermique du câble.
[Fig. 6] est une vue schématique en perspective d'un élément de rétention compris dans une installation conforme à la présente invention, dans un mode particulier de réalisation.

### Description de mode(s) de réalisation

Une installation conforme à la présente invention comporte un ou plusieurs câbles électriques, par exemple des câbles de puissance, chacun de ces câbles ayant trois conducteurs.

De façon connue en soi, l'installation comporte également un ou plusieurs fourreaux ou conduits, chacun de ces fourreaux contenant au moins un tronçon d'un des câbles précités, c'est-à-dire au moins une partie de la longueur de ce câble.

A titre d'exemple nullement limitatif, l'installation peut être une ligne souterraine de câbles de puissance. Une telle ligne est constituée de batteries de fourreaux métalliques ou thermoplastiques dans lesquels les câbles sont tirés et/ou poussés.

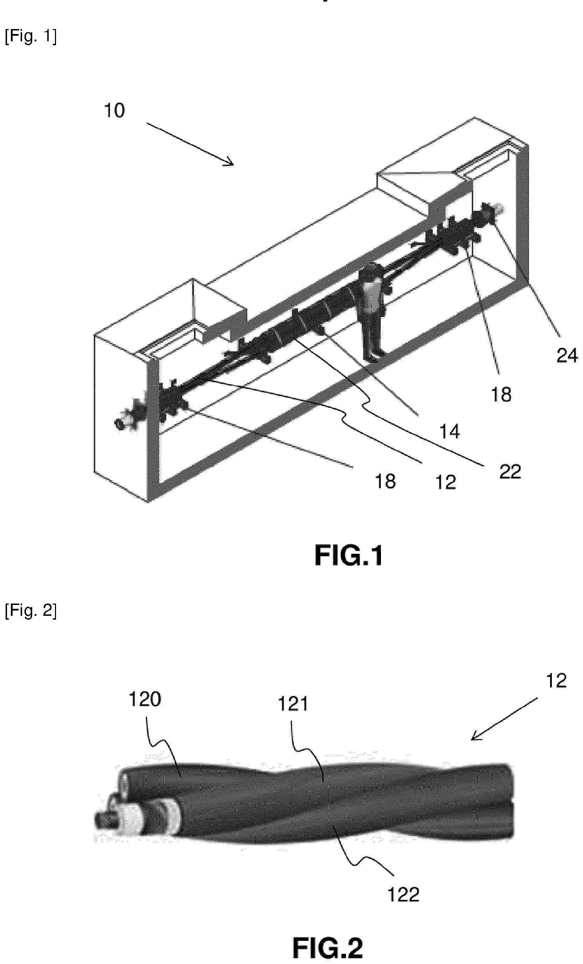

L'installation conforme à l'invention comporte en outre au moins une chambre 10 de raccordement, appelée aussi chambre de jonction, comme illustré sur la figure 1. Les fourreaux s'interrompent à l'entrée de chaque chambre 10 de raccordement, où deux tronçons du câble 12 sont raccordés entre eux par un joint 14 de raccordement, appelé aussi manchon de jonction.

De façon connue en soi, le joint 14 de raccordement sert à raccorder ensemble des câbles identiques et établir ainsi la continuité des caractéristiques de transmission, que celles-ci soient de nature électrique ou optique. En outre, le joint 14 de raccordement peut être également conçu pour rétablir autant que possible les autres caractéristiques des câbles eux-mêmes, telles que résistance mécanique, étanchéité, résistance aux éventuelles agressions, aromatiques et allopathiques, de l'environnement, protection contre les rayons ultraviolets pour les câbles exposés au rayonnement solaire, etc.

Le joint 14 de raccordement peut par exemple être inséré à peu près au centre de la chambre 10 de raccordement, c'est-à-dire approximativement à égale distance des extrémités opposées de la chambre 10 de raccordement. Etant donné que le câble 12 comporte trois conducteurs 120, 121 et 122, le joint 14 de raccordement est un joint triple, raccordant chacun des trois conducteurs des deux tronçons de câble à raccorder.

Conformément à l'invention, le câble 12 est un simple assemblage hélicoïdal des trois conducteurs 120, 121 et 122 qui le composent, comme le montre la figure 2. Le câble 12 ne comporte donc ni armure, ni gaine autour de cet assemblage hélicoïdal.

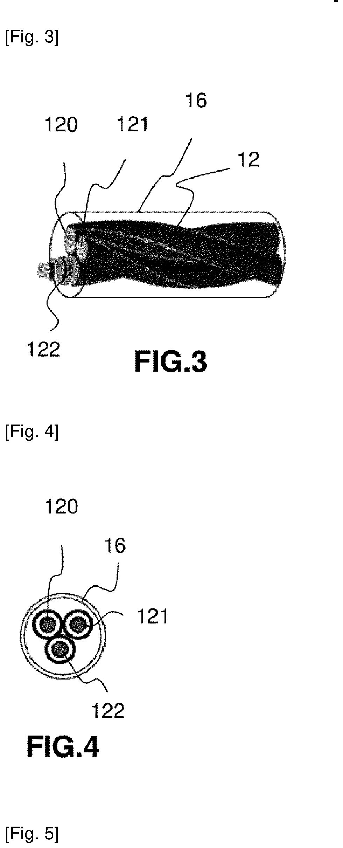

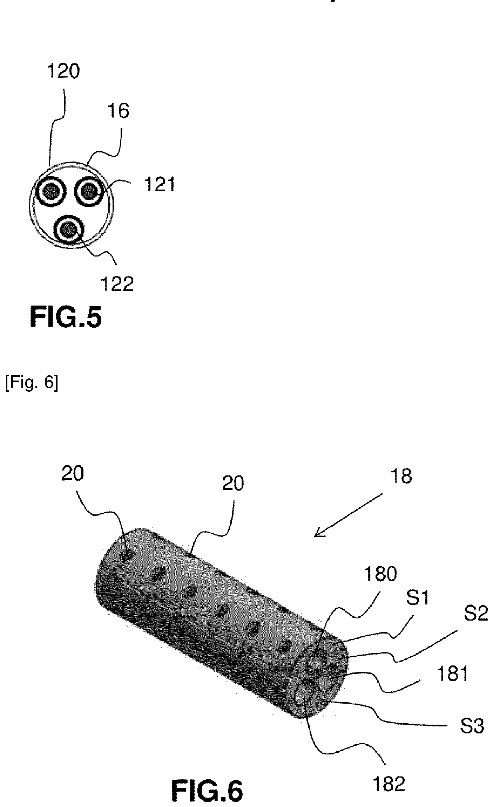

Ainsi, comme le montrent les figures 3, 4 et 5, un fourreau 16 contient au moins un tronçon du câble 12 qui, à basse température (typiquement 20°C, en l'absence de courant circulant dans le câble), ne subit pas d'allongement thermique et n'est donc pas en contact avec la paroi interne du fourreau 16, les trois conducteurs 120, 121 et 122 étant en contact mutuel (figures 3 et 4) et, à charge maximale (typiquement 90°C aux conducteurs 120, 121 et 122), subit un allongement thermique qui tend à provoquer le déplacement des trois conducteurs 120, 121 et 122 contre la paroi interne du fourreau 16 (figure 5), adoptant ainsi une trajectoire plus sinueuse, donc plus longue, à l'intérieur du fourreau 16.

Le fourreau 16 peut être réalisé dans une matière métallique, par exemple en acier. En variante, il peut être réalisé dans une matière thermoplastique, par exemple en polyéthylène PE.

Afin de bloquer les trois conducteurs 120, 121 et 122 lors du mouvement naturel et longitudinal lié à leur échauffement sous l'effet du courant, l'installation conforme à l'invention peut comporter en outre au moins un élément 18 de rétention, appelé aussi bride d'amarrage, disposé autour du câble 12 dans la chambre 10 de raccordement et permettant de pratiquer un serrage des trois conducteurs 120, 121 et 122. Cela garantit que l'élongation thermique des conducteurs demeure confinée dans le fourreau 16 et ne se propage pas dans la chambre 10 de raccordement.

Cet élément 18 de rétention est installé dans la chambre 10 de raccordement, par exemple en sortie de fourreau, c'est-à-dire à une entrée de la chambre 10 de raccordement. Il peut par exemple avoir la forme cylindrique illustrée sur la figure 6.

Dans le mode de réalisation de la figure 6, l'élément 18 de rétention est une bride tripolaire, c'est-à-dire qu'il présente trois canaux longitudinaux 180, 181 et 182 destinés à recevoir respectivement les trois conducteurs 120, 121 et 122 du câble 12. Par ailleurs, cet élément 18 de rétention cylindrique est réalisé en trois sections longitudinales S1, S2 et S3, ce qui facilite la mise en place de l'élément 18 de rétention autour du câble 12. Les trois sections longitudinales S1, S2 et S3 sont assemblées entre elles par une pluralité d'éléments d'assemblage tels que des vis qui sont insérées dans des perforations 20.

Dans le mode particulier de réalisation de la figure 1, l'installation comporte deux éléments 18 de rétention placés respectivement à des extrémités (ou entrées) opposées de la chambre 10 de raccordement.

Par ailleurs, afin de contenir le flambage des trois conducteurs 120, 121 et 122 et du joint 14 de raccordement qui relie les deux tronçons de câble dans la chambre 10 de raccordement, flambage dû à l'élongation résiduelle des conducteurs entre les deux éléments 18 de rétention, l'installation peut comporter en outre au moins un élément 22 de rigidification, fixé sur un segment de longueur prédéterminée du câble 12 et/ou du joint 14 de raccordement, dans la chambre 10 de raccordement.

L'élément 22 de rigidification peut par exemple comporter une barre ou béquille rigide. Avantageusement, une pluralité d'éléments 22 de rigidification sont fixés sur des segments de longueur prédéterminée du câble 12 et du joint 14 de raccordement, entre les deux éléments 18 de rétention dans le mode particulier de réalisation de la figure 1.

Sur chaque élément 22 de rigidification sont fixés, avantageusement à intervalles courts et réguliers, aussi bien les tronçons amont et aval du câble 12 que le joint 14 de raccordement. Ainsi, les éléments 22 de rigidification jouent un rôle similaire à celui d'une attelle en chirurgie orthopédique et maintiennent l'ensemble des éléments ainsi connectés dans la position d'origine, limitant ainsi le risque de flambage de ces éléments. Avantageusement, les éléments 22 de rigidification sont fixés de la façon la plus rectiligne possible.

En outre, afin de prévenir d'éventuels écoulements d'eau depuis le fourreau 16 en direction de la chambre 10 de raccordement, le fourreau 16 peut comporter, au niveau de son interruption à l'entrée de la chambre 10 de raccordement, au moins un élément 24 d'étanchéification obturant de façon étanche à l'eau l'espace entre l'assemblage hélicoïdal des trois conducteurs 120, 121 et 122 et la paroi interne du fourreau 16. L'élément 24 d'étanchéification, connu en soi, peut consister en un ensemble de pièces mécaniques, par exemple partiellement métalliques et partiellement en matière synthétique et peut prendre toute forme jugée appropriée.

## Revendications

1. Installation comportant au moins un câble (12) électrique ayant trois conducteurs (120, 121, 122), au moins un fourreau (16) contenant au moins un tronçon dudit au moins un câble (12) et au moins une chambre (10) de raccordement dans laquelle deux tronçons dudit au moins un câble (12) sont raccordés au moyen d'un joint (14) de raccordement, ladite installation étant **caractérisée en ce que** ledit au moins un câble (12) est un assemblage hélicoïdal desdits trois conducteurs (120, 121, 122) qui ne comporte ni armure, ni gaine autour dudit assemblage.

2. Installation selon la revendication 1, **caractérisée en ce qu'**elle comporte en outre au moins un élément (18) de rétention disposé autour dudit au moins un câble (12) dans ladite chambre (10) de raccordement.

3. Installation selon la revendication 2, **caractérisée en ce qu'**elle comporte deux éléments (18) de rétention placés respectivement à des extrémités opposées de ladite chambre (10) de raccordement.

4. Installation selon la revendication 2 ou 3, **caractérisée en ce que** ledit au moins un élément (18) de rétention est une bride tripolaire.

5. Installation selon l'une quelconque des revendications précédentes, **caractérisée en ce que** ledit joint (14) de raccordement est inséré de manière approximativement équidistante des extrémités opposées de ladite chambre (10) de raccordement.

6. Installation selon l'une quelconque des revendications précédentes, **caractérisée en ce qu'**elle comporte en outre au moins un élément (22) de rigidification fixé sur un segment de longueur prédéterminée dudit au moins un câble (12) et/ou dudit joint (14) de raccordement, dans ladite chambre (10) de raccordement.

7. Installation selon la revendication 6, **caractérisée en ce que** ledit au moins un élément (22) de rigidification comporte une barre rigide.

8. Installation selon la revendication 6 ou 7, **caractérisée en ce qu'**elle comporte une pluralité d'éléments (22) de rigidification fixés sur des segments de longueur prédéterminée dudit au moins un câble (12) et dudit joint (14) de raccordement.

9. Installation selon l'une quelconque des revendications précédentes, **caractérisée en ce que** ledit au moins un fourreau (16) comporte une paroi interne et au moins un élément (24) d'étanchéification obturant de façon étanche à l'eau l'espace entre ledit assemblage hélicoïdal desdits trois conducteurs (120, 121, 122) et ladite paroi interne.

10. Installation selon l'une quelconque des revendications précédentes, **caractérisée en ce que** ledit au moins un fourreau (16) est réalisé dans une matière thermoplastique.
